# EUROPÄISCHE PATENTSCHRIFT

(11) **EP 1 067 299 B1**
(45) Veröffentlichungstag und Bekanntmachung des Hinweises auf die Patenterteilung: **08.04.2009**
(21) Anmeldenummer: 00113850.2
(22) Anmeldetag: 30.06.2000
(51) Int. Cl.: F16B 39/286, F16B 39/36, F16B 35/02, F16B 39/34

(54) **Schraube**
Screw
Vis

(30) Priorität: 06.07.1999 DE 19930905
(43) Veröffentlichungstag der Anmeldung: 10.01.2001
(73) Patentinhaber: Haberle, Günther, Templestowe, Victoria 3106 (AU)
(72) Erfinder: Haberle, Günther, Templestowe, Victoria 3106 (AU)
(74) Vertreter: Hebing, Norbert

(56) Entgegenhaltungen:
- US-A- 2 407 160
- US-A- 2 568 640
- US-A- 3 202 194
- US-A- 3 351 966

## Beschreibung

Die Erfindung betrifft eine Schraube mit einem Gewindeschaft, welcher einen in Längsrichtung verlaufenden, den Gewindeschaft in zwei nachgiebig federnd ausgebildete Schafthälften teilenden Schlitz aufweist, durch den die Schraube zunächst axial in ein Gewindeloch geschoben werden kann, wobei die Gewindegänge der Schraube über die Gewindegänge des Gewindeloches ratschen, indem sich die Schafthälften einander nähern. Eine Schraube der vorstehenden Art ist Gegenstand der DE 38 12 111 C2.

Die bekannte Schraube lässt sich in ein Gewindeloch besonders rasch einführen, weil sie nicht von Beginn an eingeschraubt werden muss, sondern zunächst axial einzuschieben ist, wobei die Gewindegänge der Schraube über die Gewindegänge des Gewindeloches ratschen. Wenn Schrauben der vorstehenden Art an Orten eingesetzt werden, wo Vibrationen und Schwingungen auftreten, besteht die Gefahr eines selbständigen Lösens der Schrauben im Laufe der zeit. Deshalb ist es nötig, die Schrauben gegen unbeabsichtigtes Lösen zu sichern.

Zur Sicherung von Schrauben sind sehr unterschiedliche Mittel bekannt. Üblich ist es beispielsweise, auf dem Gewindeschaft einen Federring aufzuschieben, der bei festgezogener Schraube eine Vorspannkraft auf den Schraubenkopf erzeugt. Eine andere, übliche Art der Schraubensicherung besteht darin, den Schraubenkopf durch Lack mit der Fläche zu verbinden, auf der er sich bei festgezogener Schraube abstützt. Die bekannten Schraubensicherungen erfordern relativ viel zusätzlichen Aufwand, so dass man es aus Kostengründen oftmals unterlässt, solche Schraubensicherungen vorzusehen und stattdessen das Risiko eines unbeabsichtigten Lösens der Schrauben in Kauf nimmt.

Der Artikel "Schraube mit Nut und Einlage zum Sichern gegen Lösen auch bei kräftigen Vibrationen", veröffentlicht in "Maschinenmarkt", Würzburg 89 (1983) 74, Seite 1679, beschreibt auch bereits eine Schraube, welche eine in Längsrichtung entlang ihres Schaftes verlaufende, mit einer verformbaren Masse ausgefüllte Nut hat. Durch diese Nut wird es jedoch nicht möglich, die Schraube zunächst axial in ein Gewindeloch einzuschieben, sie muss vielmehr von Anfang an in das Gewindeloch eingeschraubt werden.

Die US-A-2, 407, 160 sowie die US-A-2, 568, 640 offenbaren geschlitzte Schrauben, die durch Drehen in ein Gewindeloch, zum Beispiel das einer Mutter, eingeschraubt werden. Ein in dem Schlitz befindliches Material hat die Aufgabe, eine gewisse Spannung auf die Schafthälften auszuüben, um eine Vorspannung zu erzeugen, die ein Lösen der Schraube bei Vibrationen verhindern soll. Daher kann das Material auch als Keil aus einem relativ festen und stabilen Material ausgeführt sein, wie dies in der US-A-2,568,640 gezeigt ist.

Der Erfindung liegt das Problem zugrunde, eine Schraube der eingangs genannten Art, welche zunächst axial in ein Gewindeloch geschoben werden kann, so zu gestalten, dass mit möglichst geringem Aufwand eine Sicherung gegen unbeabsichtigtes Lösen möglich wird.

Dieses Problem wird erfindungsgemäß dadurch gelöst, dass in dem Schlitz eine den Schlitz teilweise oder gänzlich ausfüllende, verformbare, das Annähern der Schafthälften beim Einschieben in das Gewindeloch nicht behindernde Masse vorgesehen ist.

Eine solche Schraube ist nur sehr geringfügig teurer als eine Schraube ohne Sicherung gegen unbeabsichtigtes Lösen. Deshalb kann man ohne wesentliche Mehrkosten grundsätzlich solche Schrauben mit Sicherung verwenden und dadurch ein unbeabsichtigtes Lösen der Schrauben ausschließen. Da die Masse gemäß der Erfindung verformbar ist, behindert sie nicht das Annähern der Schafthälften beim axialen Einschieben des Gewindeschaftes in ein Gewindeloch. Die erfindungsgemäße Schraube kann deshalb genau wie die Schraube nach der eingangs genannten DE 38 12 111 C2 zunächst axial in ein Gewindeloch eingeschoben werden, wobei die Masse in ihrem Schlitz zusammengedrückt wird.

Besonders günstig ist es, wenn gemäß einer vorteilhaften Weiterbildung der Erfindung die Masse ein elastisches Polymer ist. Eine solche Masse ist besonders kostengünstig und führt zu einer wirksamen Schraubensicherung.

Zur weiteren Erhöhung der Haltekraft der Schraubensicherung dient es, wenn gemäß einer anderen Weiterbildung der Erfindung die Masse ein Fasermaterial oder faservermischtes Kunststoffmaterial oder Kunststoff-Metall-Kompositmaterial ist.

Die Kräfte beim Einschieben der Schraube sind besonders gering, wenn die Masse eine unter Druck aushärtende Kunststoffmasse, beispielsweise ein Lack ist.

Da die Schafthälften zu beiden Seiten des Schlitzes beim Einschieben der Schraube in ein Gewindeloch zusammengedrückt werden, vermag die Masse in dem Schlitz beim Einschieben nach außen zu gelangen, um die Sicherungsfunktion auszuüben, so dass sie vorher das Einschieben nicht behindert, wenn die Masse maximal bis zur Außenkontur des Gewindeschaftes reicht.

Falls ganz besonders hohe Sicherungskräfte erforderlich sind, kann man jedoch auch vorsehen, dass die Masse zu beiden Seiten des Schlitzes über die Kontur des Außendurchmessers des Gewindeschaftes vorspringt.

Die Masse kann in dem Schlitz zuverlässig verankert werden, wenn der Schraubenschaft zumindest eine in den Schlitz führende Querbohrung hat und die Masse in diese Querbohrung eingreift.

Zur weiteren Erhöhung der Haltekraft trägt es bei, wenn die Masse zugleich zumindest einen Teilbereich der Mantelfläche des Gewindeschaftes überzieht.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig.1: eine Vorderansicht einer erfindungsgemäßen Schraube,
- Fig.2: eine Seitenansicht der Schraube,
- Fig.3: eine gegenüber Fig.2 um 90° verdrehte Seitenansicht der Schraube,
- Fig.4: eine Seitenansicht einer zweiten Ausführungsform einer erfindungsgemäßen Schraube,
- Fig.5 - 8: Schnitte durch den Gewindeschaft verschiedener Ausführungsformen der Schraube.

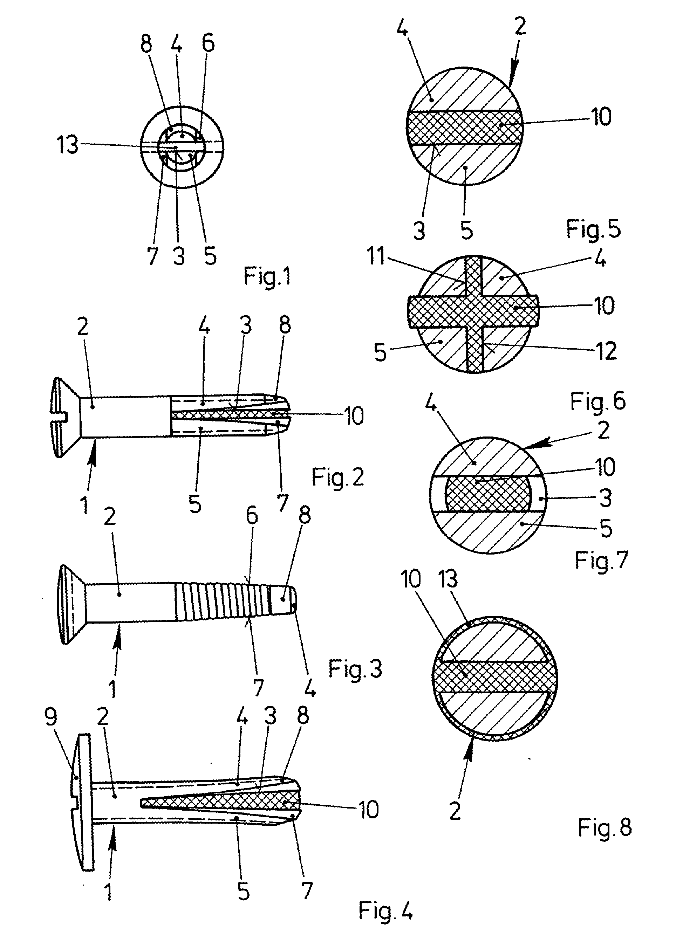

Die Figuren 1, 2 und 3 zeigen eine Schraube 1, die als Linsenkopfschraube ausgebildet ist. Sie hat einen Gewindeschaft 2, welcher einen zentrisch angeordneten, in Längsrichtung verlaufenden Schlitz 3 hat, der den vorderen Teil des Gewindeschaftes 2 in zwei Schafthälften 4, 5 aufteilt. An den beiden Längsseiten des Gewindeschaftes 2 sind zwei senkrecht zum Schlitz 3 verlaufende Freiflächen 6, 7 vorgesehen, die in einem spitzen Winkel zueinander angeordnet sind. Der vordere Teil des Gewindeschaftes 2 ist mit einer kegelförmigen Verjüngung 8 versehen.

Die in Figur 4 gezeigte Schraube 1 unterscheidet sich von der zuvor beschriebenen Schraube 1 insbesondere durch einen großflächigen Schraubenkopf 9. Derartige Schrauben werden insbesondere zur Abdeckung von Befestigungsdübeln und als Halteschrauben für Regalrückwände benutzt. Bei der gezeigten Schraube 1 sind die beiden Schafthälften 4, 5 des Gewindeschaftes 2 nachgiebig federnd ausgebildet und gespreizt zueinander angeordnet. Hierzu sind der Gewindeschaft 2 und der großflächige Schraubenkopf 9 vorzugsweise aus einem elastischen Kunststoff oder einer Aluminium-Magnesium-Legierung im Press- oder Spritzverfahren hergestellt. Besteht die Schraube 1 aus Stahl, so kann die Federwirkung der Schafthälften 4, 5 durch geeignete Materialauswahl und Verformungsverfahren oder nach der Herstellung durch Härt- und Anlassverfahren erzeugt werden.

Wichtig für die Erfindung ist eine verformbare Masse 10, welche in dem Schlitz 3 vorgesehen ist. Diese Masse 10 dient der Schraubensicherung. Sie kann über die gesamte Länge des Schlitzes 3 oder auch nur über einen Teilbereich seiner Länge vorgesehen sein.

Die Figur 5 lässt erkennen, dass die Masse 10 bündig mit der Außenkontur des Gewindeschaftes 2 abschließen kann. Möglich ist es jedoch auch, dass die Masse 10 geringfügig über die Außenkontur des Gewindeschaftes 2 ragt, was die Figur 6 zeigt. Zugleich zeigt Figur 6 zwei Querbohrungen 11, 12, welche durch die Schafthälften 4, 5 hindurch in den Schlitz 3 führen und ebenfalls mit der Masse 10 ausgefüllt sind. Dadurch wird die Masse 10 im Schlitz 3 zuverlässig verankert. Die Masse 10 kann auch aus den Querbohrungen 11, 12 geringfügig vorspringen, um die Haltekraft der Schraube 11 in einem Gewindeloch zu erhöhen.

Bei der Ausführungsform nach Figur 7 reicht die Masse 10 im Schlitz 3 nicht bis zur Außenkontur des Gewindeschaftes 2. Wenn sich die Schafthälften 4, 5 beim Einschieben der Schraube 1 in ein Gewindeloch einander nähern, dann wird die Masse 10 zusammengedrückt und gelangt dadurch gegen die Gewindegänge.

Bei der Ausführungsform nach Figur 8 bildet die Masse 10 zugleich eine Umhüllung 13, die zumindest einen Teilbereich des Gewindeschaftes 2 ummantelt.

### Bezugszeichenliste

- 1: Schraube
- 2: Gewindeschaft
- 3: Schlitz
- 4: Schafthälfte
- 5: Schafthälfte
- 6: Freifläche
- 7: Freifläche
- 8: Verjüngung
- 9: Schraubenkopf
- 10: Masse
- 11: Querbohrung
- 12: Querbohrung
- 13: Umhüllung

## Patentansprüche

1. Schraube (1) mit einem Gewindeschaft (2), welcher einen in Längsrichtung verlaufenden, den Gewindeschaft (2) in zwei nachgiebig federnd ausgebildete Schafthälften (4, 5) teilenden Schlitz (3) aufweist, durch den die Schraube (1) zunächst axial in ein Gewindeloch geschoben werden kann, wobei die Gewindegänge der Schraube (1) über die Gewindegänge des Gewindeloches ratschen, indem sich die Schafthälften (4, 5) einander nähern, **dadurch gekennzeichnet, dass** in dem Schlitz (3) eine den Schlitz(3) teilweise oder gänzlich ausfüllende, verformbare, das Annähern der Schafthälften (4, 5) beim Einschieben in das Gewindeloch nicht behindernde Masse (10) vorgesehen ist.

2. Schraube nach Anspruch 1, **dadurch gekennzeichnet, dass** die Masse (10) ein elastisches Polymer ist.

3. Schraube nach Anspruch 1, **dadurch gekennzeichnet, dass** die Masse (10) ein Fasermaterial oder faservermischtes Kunststoffmaterial oder ein Kunststoff-Metall-Kompositmaterial ist.

4. Schraube nach Anspruch 1, **dadurch gekennzeichnet, dass** die Masse (10) eine unter Druck aushärtende Kunststoffmasse, beispielsweise ein Lack ist.

5. Schraube nach zumindest einem der vorangehenden Ansprüche, **dadurch gekennzeichnet, dass** die Masse (10) maximal bis zur Außenkontur des Gewindeschaftes (2) reicht.

6. Schraube nach zumindest einem der vorangehenden Ansprüche, **dadurch gekennzeichnet, dass** die Masse (10) zu beiden Seiten des Schlitzes (3) über die Kontur des Außendurchmessers des Gewindeschaftes (2) vorspringt.

7. Schraube nach zumindest einem der vorangehenden Ansprüche, **dadurch gekennzeichnet, dass** der Gewindeschaft (2) zumindest eine in den Schlitz (3) führende Querbohrung (11, 12) hat und die Masse (10) in diese Querbohrung (11, 12) eingreift.

8. Schraube nach zumindest einem der vorangehenden Ansprüche, **dadurch gekennzeichnet, dass** die Masse (10) zugleich zumindest einen Teilbereich der Mantelfläche des Gewindeschaftes (2) überzieht.

## Claims

1. Screw (1) comprising a threaded shaft (2) which has a slot (3) running lengthwise dividing the threaded shaft (2) into two resilient elastic shaft halves (4, 5), allowing the screw (1) to be pushed axially into a threaded hole, whereby the threads of the screw (1) slip over the threads of the hole by the shaft halves (4, 5) approaching each other, **characterized in that** a mass (10) partially or completely fills the slot (3), whereby the mass is deformable and does not interfere with the approaching of the shaft halves (4, 5) when these are pressed into the threaded hole.

2. Screw according to claim 1, **characterized in that** the mass (10) is an elastic polymer.

3. Screw according to claim 1, **characterized in that** the mass (10) is a fiber material or a synthetic material mixed with fiber or a composite material of synthetic material and metal.

4. Screw according to claim 1, **characterized in that** the mass (10) is a synthetic material which hardens under pressure, for example a varnish.

5. Screw according to at least one of the preceding claims, **characterized in that** the mass (10) reaches at most only as far as the outer contour of the threaded shaft (2).

6. Screw according to at least one of the preceding claims, **characterized in that** the mass (10) projects on both sides of the slot (3) past the contour of the outside diameter of the threaded shaft (2).

7. Screw according to at least one of the preceding claims, **characterized in that** the threaded shaft (2) has at least one transverse bore (11, 12) leading into the slot (3) and the mass (10) reaches into this transverse bore (11, 12).

8. Screw according to at least one of the preceding claims, **characterized in that** the mass (10) at the same time coats at least a portion of the periphery of the threaded shaft (2).

## Revendications

1. Vis (1) comportant une tige filetée (2), laquelle présente une fente (3) s'étendant dans la direction longitudinale, divisant la tige filetée (2) en deux moitiés de tige (4,5) configurées de manière flexible et faisant ressort, par l'intermédiaire de laquelle la vis (1) peut être poussée tout d'abord axialement dans un trou fileté, dans laquelle les pas de vis de la vis (1) dérapent sur les pas de vis du trou fileté, en rapprochant les moitiés de tige (4,5) l'une de l'autre, **caractérisée en ce que** dans la fente (3) est prévue une masse (10) remplissant partiellement ou totalement la fente, déformable et n'empêchant pas le rapprochement des moitiés de tige (4,5) lors de l'insertion dans le trou fileté.

2. Vis selon la revendication 1, **caractérisée en ce que** la masse (10) est un polymère élastique.

3. Vis selon la revendication 1, **caractérisée en ce que** la masse (10) est un matériau à fibres ou un matériau plastique mélangé à des fibres ou un matériau composite métal/plastique.

4. Vis selon la revendication 1, **caractérisée en ce que** la masse (10) est une masse plastique durcissant sous pression, par exemple une laque.

5. Vis selon au moins une des revendications précédentes, **caractérisée en ce que** la masse (10) s'étend au maximum jusqu'au contour extérieur de la tige filetée (2).

6. Vis selon au moins une des revendications précédentes, **caractérisée en ce que** la masse (10) dépasse des deux côtés de la fente (3) sur le contour du diamètre extérieur de la tige filetée (2).

7. Vis selon au moins une des revendications précédentes, **caractérisée en ce que** la tige filetée (2) possède au moins un alésage transversal (11,12) menant à la fente (3) et la masse (10) s'engage dans cet alésage transversal (11,12).

8. Vis selon au moins une des revendications précédentes, **caractérisée en ce que** la masse (10) recouvre simultanément au moins une zone partielle de la surface périphérique de la tige filetée (2).
